# EUROPEAN PATENT APPLICATION

(11) **EP 2 374 743 A1**
(43) Date of publication of application: **12.10.2011**
(21) Application number: 10194372.8
(22) Date of filing: 09.12.2010
(51) Int. Cl.: B65G 63/00, B65D 88/02

(54) **Quay-wall system for loading and unloading containers, mobile harbor and transporting device for use therein**

(30) Priority: 17.12.2009 KR 20090126184
(71) Applicant: Korea Advanced Institute of Science and Technology, Daejeon 305-701 (KR)
(72) Inventor: Lee, Tae-Eog, 305-701, Daejeon (KR); Choi, Koog-Jin, 305-701, Daejeon (KR); Lee, Seokhyun, Daejeon 305-732 (KR); Kim, JungHoon, 305-701, Daejeon (KR); Kim, HyunJung, Daejeon 305-732 (KR)
(74) Representative: Kindermann, Peter

(57) **Abstract**

A quay-wall system for loading and unloading containers includes a quay-wall (Q) having a open-air storage yard, (200) a floating body (100) berthed to the quay-wall (Q) and resting a ramp (110) on the quay-wall (Q), a pallet (400) formed for receiving one or more containers, and a transporting device (300) transporting the plurality of pallets (400) in parallel. A mobile harbor for use in the quay-wall system includes the ramp (110), a loading space (159) in which one or more pallets (400) having one or more containers accommodated therein can be placed, wherein the loading space (150) has guide grooves (130) formed thereon for guiding a transporting device (300). A transporting device (300) for use in the quay-wall system includes a transporting device (300) for being coupled a plurality of pallets (400) in parallel and transporting the pallets (400) from the open-air storage yard (200) to a floating body (100) or from the floating body (100) to the open-air storage yard (200).

## Description

### Field of the Invention

The present invention relates to a quay-wall system for loading and unloading containers through a transporting device such as a tractor, and a mobile harbor and a transporting device for use therein.

### Background of the Invention

As means for transporting goods and cargos between two remote places, a marine transportation using a ship consumes less energy than the other transportation means consume. Accordingly, the marine transportation accounts for great part of the international trades due to a low transportation cost.

In a marine transportation using a container ship, a large-sized ship is recently employed to enhance the transportation efficiency and to secure economic feasibility. For this reason, large-scale docks equipping with berthing and unloading facilities for large-sized ships are required increasingly.

A conventional system for unloading and loading containers employs a gantry crane for unloading and loading cargos transported. The gantry crane is the equipment lifting and transporting a container having a specific size.

Generally, the gantry crane has a steel frame and a crane supported by the steel frame. The steel frame consists of a column built upright on a ground and a guide rail supported by the column and extended horizontally. The crane can be two-axis controlled such that the container can be moved along the guide rail and moved simultaneously in the direction perpendicular to the guide rail.

In a case where the container loaded in the ship is unloaded by means of the above gantry crane, after the gantry crane is moved to a location to which the ship is berthed, a spreader of the crane is descended and grabs one of the containers loaded in the ship. Then, the container is lifted and moved to a trailer stopped at the dock by the crane. Subsequently, a grabbing force of the spreader is removed to unload the container to the trailer.

Then, the spreader is separated from the container, and is returned to the ship for repeating the unloading process for next container. During a movement of the crane to the ship, the trailer in which the container is loaded leaves the dock, and next trailer is entered to the dock and waits. The above processes are repeated until finishing the unloading processes for all the containers in the ship. An operation for loading the containers on the ship is performed in order which is reverse of the above unloading process.

In the loading and unloading processes according to the conventional system as described above, however, the crane transports the containers one by one intermittently. Accordingly, there is a problem that it will take a lot of time to transfer the containers from the ship to the trailer or from the trailer to the ship. In addition, if a ready status of any one of the ship, the trailer, and the spreader is delayed, an operation of the conventional system should be halted until the ready status is completed.

### Summary of the Invention

The present invention provides a quay-wall system for loading and unloading containers, which includes a quay-wall, a floating body, and a transporting device being capable of moving a plurality of pallets accommodating one or more containers simultaneously. The present invention also provides a mobile harbor and a transporting device for use in the quay-wall system.

In accordance with a preferred aspect of the present invention, there is provided a quay-wall system for loading and unloading containers, comprising a quay-wall having a open-air storage yard provided at an upper portion thereof; a floating body berthed to the quay-wall and resting a ramp on the quay-wall; a pallet formed for receiving one or more containers and loaded on the open-air storage yard or the floating body; and a transporting device transporting the plurality of pallets in parallel from the floating body to the open-air storage yard or from the open-air storage yard to the floating body.

In accordance with another preferred aspect of the present invention, there is provided a mobile harbor, comprising; a ramp adapted to be rested on a quay-wall; and a loading space provided on the mobile harbor to accommodate one or more pallets having one or more containers stacked therein, wherein the loading space has guide grooves formed thereon for guiding a transporting device which is adapted to be coupled with the two or more pallets in parallel and transports the pallets from the loading space to an open-air storage yard of the quay-wall or from the open-air storage yard to the loading space.

In accordance with still another preferred aspect of the present invention, there is provided a transporting device for being coupled a plurality of pallets in parallel and transporting the pallets from an open-air storage yard provided on a quay-wall to a floating body or from the floating body to the open-air storage yard.

### Brief Description of the Drawings

The objects and features of the present invention will become apparent from the following description of preferred embodiments given in conjunction with the accompanying drawings, in which:
Fig. 1 is a schematic view of a quay-wall system for loading and unloading a container according to one embodiment of the present invention;
Fig. 2 describes a perspective view of a mobile harbor according to one embodiment of the present invention;
Fig. 3 illustrates an upper perspective view of a mobile harbor according to one embodiment of the present invention;
Fig. 4 shows a perspective view of an unloading open-air storage yard according to one embodiment of the present invention;
Fig. 5 is a perspective view of a loading open-air storage yard according to one embodiment of the present invention;
Fig. 6 describes an exploded perspective view of a pallet according to one embodiment of the present invention; and
Fig. 7 shows an exploded perspective view of a transporting device according to one embodiment of the present invention.

### Detailed Description of the Embodiments

Hereinafter, embodiments of the present invention will be described in detail with reference to the accompanying drawings so that they can be readily implemented by those skilled in the art.

The below specific embodiments illustrate a quay-wall system for loading and unloading containers, a mobile harbor, and a transporting device for use therein according to the present invention as examples, but the present invention is not limited thereto.

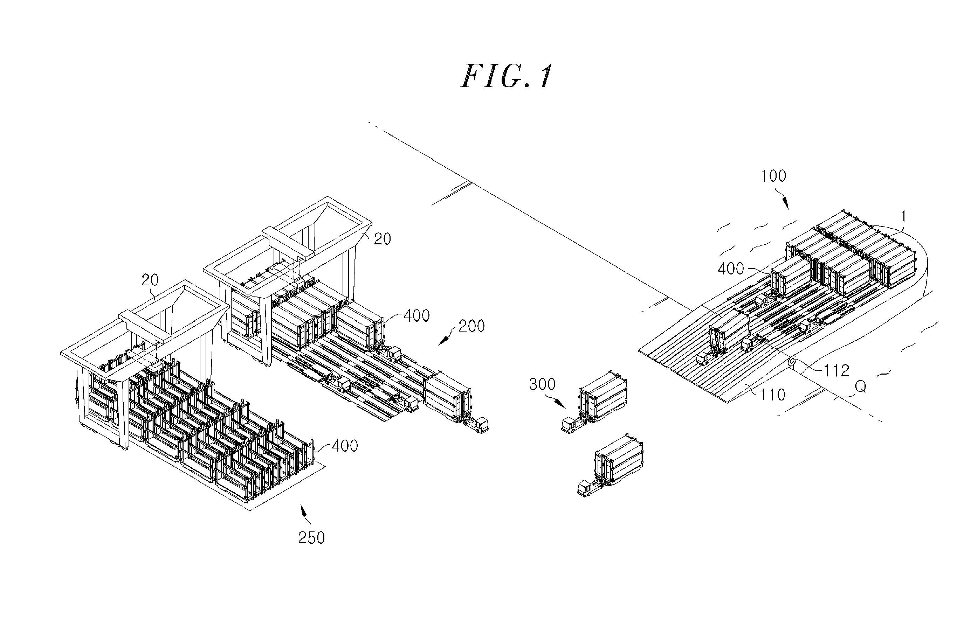

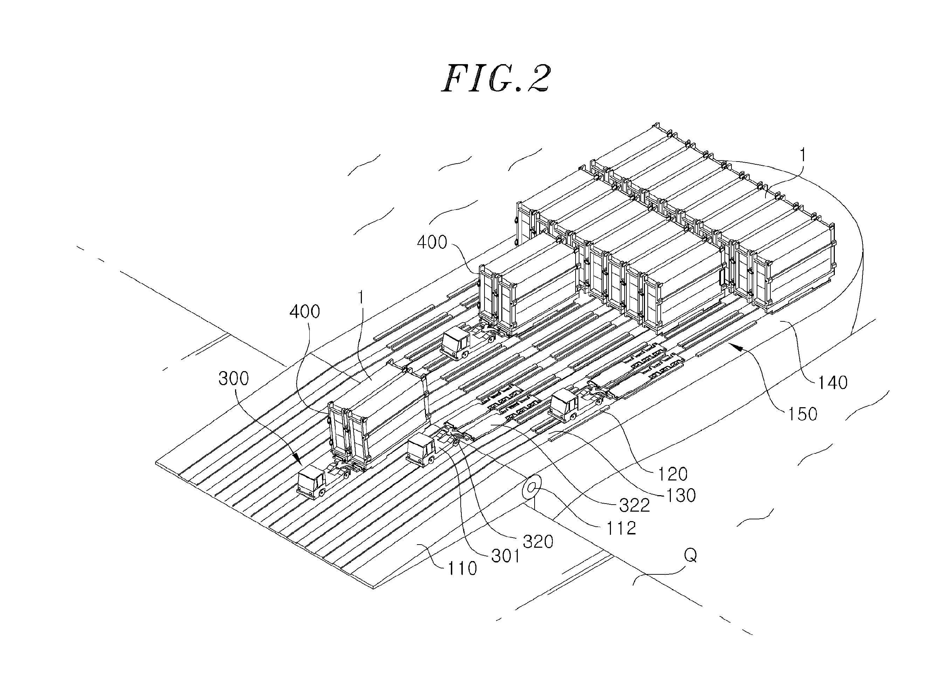

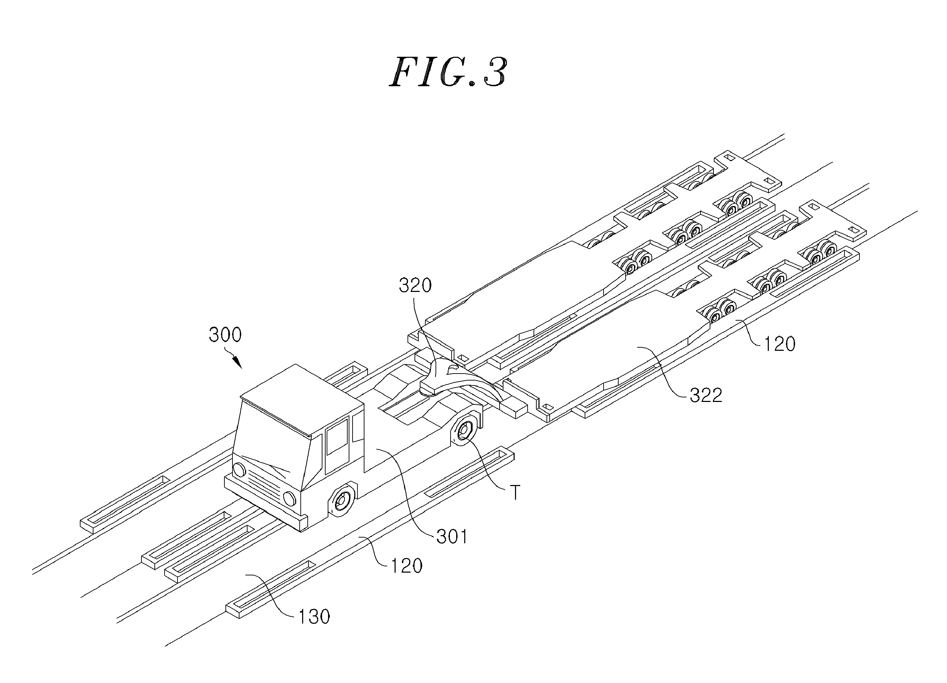

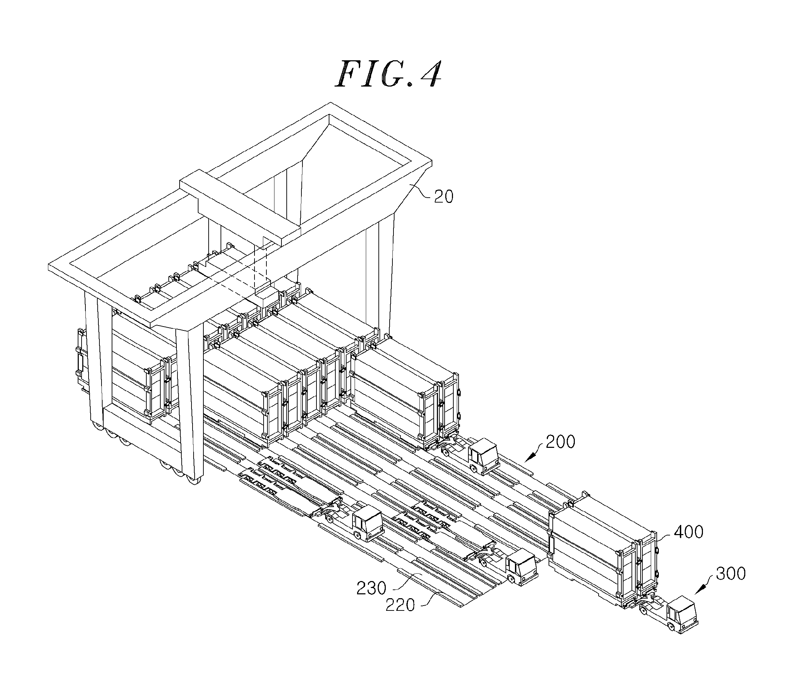

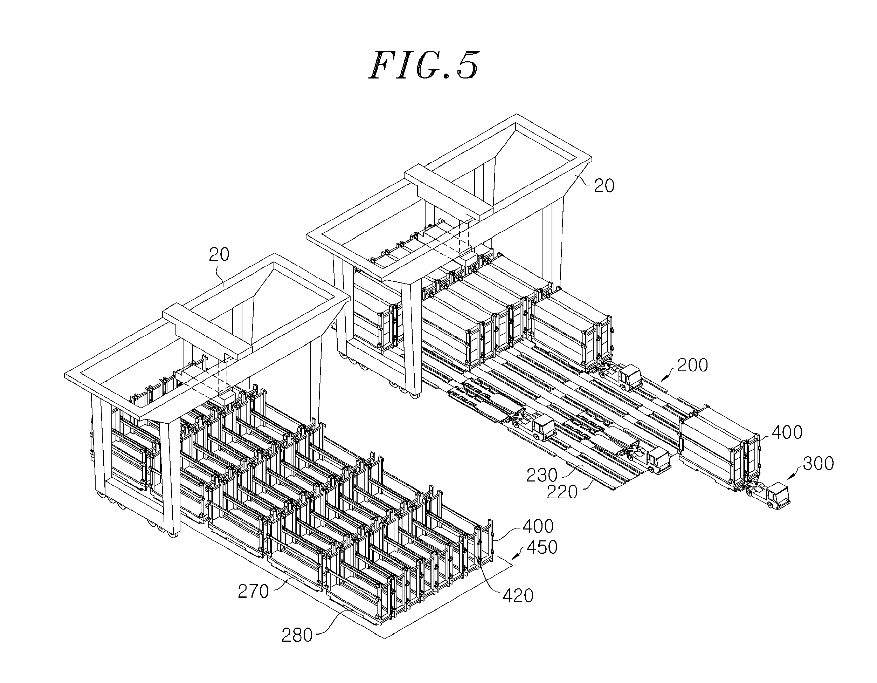

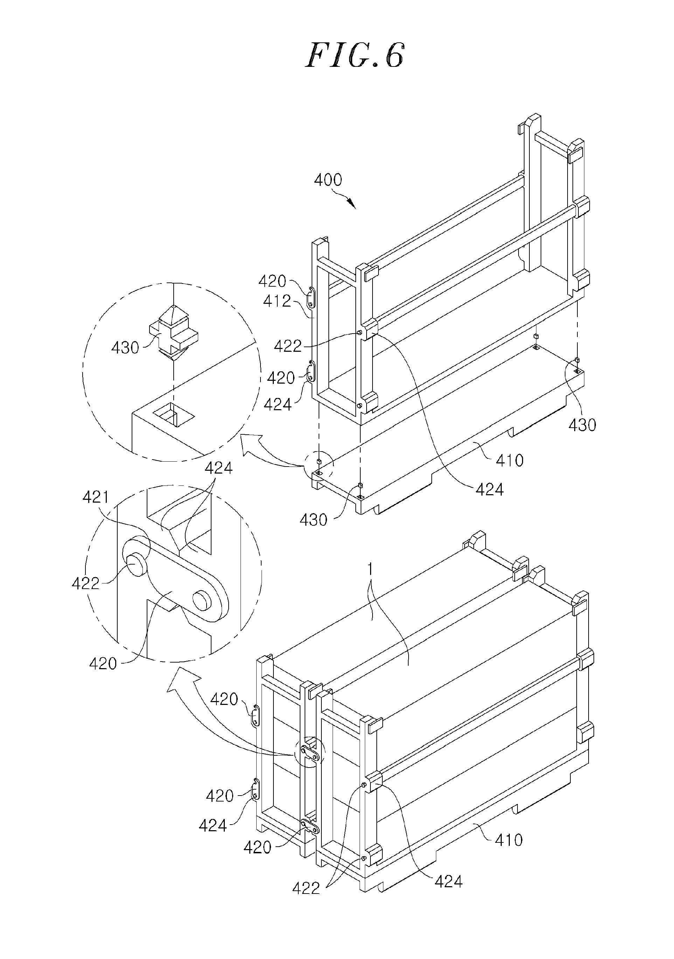

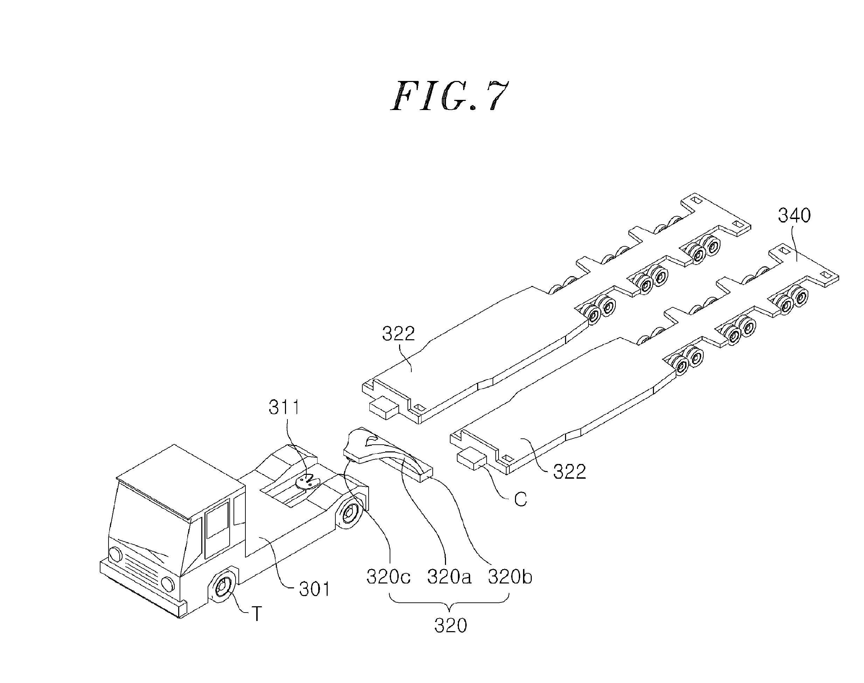

Fig. 1 is a schematic view of a quay-wall system for loading and unloading containers according to one embodiment of the present invention; Fig. 2 is a perspective view of a mobile harbor according to one embodiment of the present invention; Fig. 3 is an upper perspective view of a mobile harbor according to one embodiment of the present invention; Fig. 4 is a perspective view of an unloading open-air storage yard according to one embodiment of the present invention; Fig. 5 is a perspective view of a loading open-air storage yard according to one embodiment of the present invention; Fig. 6 is an exploded perspective view of a pallet according to one embodiment of the present invention; and Fig. 7 is an exploded perspective view of a transporting device according to one embodiment of the present invention.

First, a quay-wall system for loading and unloading containers according one embodiment of the present invention will be illustrated in detail with reference to Fig. 1.

As shown in Fig. 1, a quay-wall system for loading and unloading containers according to the embodiment of the present invention includes a quay-wall Q on which open-air storage yards 200, 250 are provided, a floating body 100 being berthed to the quay-wall Q and resting a ramp 110 on the quay-wall Q, a pallet 400 formed for receiving containers 1 and loaded on the open-air storage yards 200, 250 or the floating body 100, and a transporting device 300 transporting the plurality of pallets 400 arranged in parallel from the floating body 100 to the open-air storage yards 200, 250 or from the open-air storage yards 200, 250 to the floating body 100.

First of all, the quay-wall Q means a structure which is extended from a dock or harbor (not shown) to enable the floating body 100 such as a ship or mobile harbor to be berthed thereto, and various kinds of equipments such as fenders (not shown) for berthing the floating body can be provided at a side of the quay wall at which the floating body 100 is berthed. Although the quay-wall Q means a structure which is extended from the dock or harbor, all the structure including the dock or harbor at which the ship or mobile harbor can be berthed will be commonly called as the quay-wall in the below description.

The open-air storage yards 200, 250 are provided on the quay-wall Q, and the open-air storage yards 200, 250 may include the unloading open-air storage yard 200 and the loading open-air storage yard 250. The unloading open-air storage yard 200 means a space in which cargos transported from the floating body 100 such as a ship or mobile harbor are stacked, and the loading open-air storage yard 250 means a space in which cargos to be transported to the floating body 100 such as a ship or a mobile harbor are stacked. One or more open-air storage yards 200, 250 may be provided on the quay-wall Q, and each of the open-air storage yards 200, 250 may be provided with a rail-mounted gantry crane. The rail-mounted gantry crane moves the container from the open-air storage yards 200, 250 to a truck which transports the container to outside of the quay-wall.

A plurality of pallets 400, which accommodate one or more containers 1 and are loaded on the floating body 100 berthed to the quay-wall Q, are transported by the transporting device 300 in parallel, and unloaded in order at certain intervals in the unloading open-air storage yard 200. In addition, a plurality of pallets 400 placed in the loading open-air storage yard 250 are connected in parallel to the transporting device 300 and then transported to the floating body 100.

Next, the floating body 100 means a ship or mobile harbor which can be berthed to the quay-wall Q. After the floating body 100 is berthed to the quay-wall Q, in order to unload the pallets 400 (in which the containers 1 are accommodated) loaded at an upper portion 140 of the floating body 100 to the unloading open-air storage yard 200, or in order to load the pallets 400 (in which the containers 1 are accommodated) placed in the loading open-air storage yard 250 to the upper portion 140 of the floating body 100, the ramp 110 is rested on the quay-wall Q for forming a slope way between the upper portion 140 of the floating body 100 and an upper portion of the quay-wall Q. Hereby the transporting device 300 connecting the pallets 400 in parallel can be travelled between the floating body 100 and the open-air storage yards 200, 250 through the ramp 110.

Here, the ramp 110 may be formed such that the ramp 110 can be folded and unfolded at one side of the floating body 100. The ramp 110 can be hinge-coupled to the floating body 100 by a hinge 112.

Although the floating body 100 and the ramp 110 is coupled by the hinge 112, it will be apparent that other coupling structures employed in a large construction such as a conventional ship may be used as the coupling structure of the present invention. In addition, it will be apparent that the ramp 110 can be folded and unfolded in one stage with respect to the floating body 100 by one hinge-coupling, and the ramp 110 is a combination of multi plates connected by a plurality of hinge-couplings so that the ramp 110 can be folded and unfolded in multi stages with respect to the floating body 100.

Next, the pallet 400 is formed such that one or more containers 1 can be accommodated in the pallet, and the pallet is loaded in the open-air storage yards 200, 250 or at the upper portion of the floating body 100. The pallets 400 are spaced apart each other at the open-air storage yards 200, 250 or at the floating body 100 by a certain interval to enable the transporting device 300 (which will be illustrated in detail) to be moved under the pallets 400 and coupled to the pallets for allowing the transporting device 300 to transport the pallets 400 in parallel.

The transporting device 300 transports the pallets in parallel from the floating body 100 berthed to the quay-wall Q to the unloading open-air storage yard 200 or from the loading open-air storage yard 250 to the floating body 100. The transporting device 300 is constructed such that the transporting device 300 can be coupled to each of the pallets 400 to arrange the pallets 400 (in which one or more containers 1 are accommodated) in parallel. Concretely, the transporting device 300 includes a plurality of movable carts 322, each of which being coupled to the pallet 400 on an upper portion thereof; a parallel connector 320 connected to front portions of the movable carts 322 to connect the movable carts 322 in parallel with respect to a movement direction of the movable carts 322; and a transporting vehicle 301 coupled to the parallel connector 320.

Below, the transporting device 300 is illustrated in more detail with reference to Fig. 7.

First of all, the movable cart 322 is connected and fixed with the pallet 400 at the upper portion, and has a longitudinal length which is the same as or longer than a length of the container 1 accommodated in the pallet 400.

The parallel connector 320 is connected to a plurality of movable carts 322, enables the plurality of movable carts 322 to be moved following the transporting vehicle 301 with maintaining a certain distance between the movable carts 322 when the transporting vehicle 301 is travelled. The parallel connector 320 may include movable cart-connecting parts 320b connected to the plurality of movable carts; a transporting vehicle-connecting part 320c connected to the transporting vehicle 301 via a connecting part 311; and a connecting arm 320a for connecting the movable cart-connecting parts 320b and the transporting vehicle-connecting part 320c.

The movable cart-connecting part 320b may include a shape of beam which can be coupled with the end portion of the movable cart 322. That is, the shape of beam may be coupled with a protrusion C provided at one end of the movable cart 322. After ends of the movable carts 322 are coupled with the movable cart-connecting parts 320b, a distance between the movable carts 322 can be the same as a distance between the pallets 400 loaded on the open-air storage yards 200, 250 or loaded on the floating body 100 such as a ship or a mobile harbor.

Here, the protrusion C can be coupled with the movable cart-connecting part 320b by various manners. For example, although not shown in the drawings, the protrusion C can be coupled with the movable cart-connecting part 320b by a coupling achieved by a pin passing through the protrusion C and the movable cart-connecting part 320b or a bolt provided on the protrusion C. Also, the movable cart-connecting part 320b and the movable cart 322 can be connected to each other by a pin or bolt, and can be separated from each other by loosening a bolt or removing a pin.

The transporting vehicle-connecting part 320c is formed such that the transporting vehicle-connecting part 320c can be coupled with the connecting part 311 provided at the transporting vehicle 301. Although not shown in the drawings, the transporting vehicle-connecting part 320c is coupled with the connecting part 311 through a pin so that if the connecting part 311 is rotated by a turn of the transporting vehicle 301 in a specific direction, the transporting vehicle-connecting part 320c can be rotated with respect to the pin acting as a rotational axis to tow smoothly the movable carts 322.

Next, the transporting vehicle-connecting part 320c and the movable cart-connecting parts 320b are connected to each other through the connecting arm 320a. In a case where the movable cart-connecting parts 320b to be connected to the movable carts 322 disposed in parallel includes the shape of beam and the transporting vehicle-connecting part 320c is coupled with the connecting part 311 of the transporting vehicle 301 by a pin, it is desirable that the connecting arm 320a consists of a plurality of arms. The number of arms of the connecting arm 320a can be the same as the number of the movable carts 322 to be connected to the parallel connector 320. However, not limited to the number of the movable carts 322 to be connected to the parallel connector 320, the number of arms of the connecting arm 320a can be determined appropriately for connecting stably the transporting vehicle-connecting part 320c with the movable cart-connecting parts 320b.

Here, the movable cart-connecting part 320b and the transporting vehicle-connecting part 320c can be fixedly connected to each other to prevent a relative movement of each of the movable carts 322 from being occurred. Also, the movable cart-connecting part 320b and the transporting vehicle-connecting part 320c can be non-fixedly connected to each other by a chain and the like to enable a relative motion between the two parts to be generated. It will be apparent that the fixed connection or the non-fixed connection can be appropriately selected according to a cargo-transportation environment of the quay-wall.

The transporting vehicle 301 means a driving body which can tow and transport two or more movable carts 322, for example, a truck, a tractor, or a trailer can be used as the transporting vehicle 301. The transporting vehicle 301 can include the connecting part 311 which can be connected with the parallel connector 320 to be connected to the movable carts 322.

Here, guide grooves 130, 230, 280 can be formed on the open-air storage yards 200, 250 and the floating body 100 for guiding the transporting vehicle 301 so as to enable two or more movable carts 322 to be simultaneously entered under the two or more pallets 400. The guide grooves 130, 230, 280 are formed such that a distance between the guide grooves 130, 230, 280 is substantially the same as or larger than a width of the movable cart 322 coupled to the transporting vehicle 301. Accordingly, the guide grooves 130, 230, 280 can act as an indicator and guider guiding a location to which the transporting device 300 should be entered from the open-air storage yards 200, 250 and the floating body 100. The guide grooves 130, 230, 280 can be structures obtained by digging longitudinal grooves on the upper portions of the open-air storage yards 200, 250 and the floating body 100. Additionally, it is apparent that the guide grooves 130, 230, 280 can be formed by appending additional structures(for example, 120, 220, and 270) on the open-air storage yards 200, 250 and the floating body 100 at certain intervals.

In addition, although not shown in the drawings, the guide grooves 130, 230, 280 can be formed at locations corresponding to wheels T of the transporting device 300. Here, each of the guide grooves 130, 230, 280 has a width which has the same as or larger than a width of the wheel T of the transporting device 300 so that the wheels T of the transporting device can be entered in and guided by the guide grooves 130, 230, 280. Also, in this case, structures obtained by digging longitudinal grooves on the upper portions of the open-air storage yards 200, 250 and the floating body 100 may be used as the guide grooves, and additional structures (for example, 120, 220 and 270) can be provided with the open-air storage 200, 250 yards and the floating body 100 to form the guide grooves 130, 230, 280.

Also, it is apparent that the groove 130 formed on the upper portion 140 of the floating body 100 can be extended to the ramp 110 connected to the floating body 100 to enable the transporting device 300 to be guided from the entrance step of the ramp 110.

Below, the pallets 400 which are stacked on the open-air storage yards 200, 250 or the floating body 100 and then arranged and transported in parallel by the transporting device 300 will be illustrated in more detail with reference to Fig. 6.

The pallet 400 may include a bottom plate 410 and a supporting frame 412 formed upward to support one or more containers 1. Here, the supporting frame 412 can be coupled with the bottom plate 410 by one or more twist locks 430.

The support frame 412 in the form of a vertical frame having a framework structure is provided on an upper side of the bottom plate 410 of the pallet 400 to secure one or more containers 1, and prevents one or more containers 1 from being shaken or moved.

In addition, the supporting frame 412 may include protrusion parts 424 extended from both sides thereof, the protrusion parts 424 are protruded within the range in which the protrusion parts 424 are not overlapped with the support frame 412 of the adjacent pallet 400 placed in parallel.

Here, each of the protrusion parts 424 on the one side of the support frame 412 can be provided with a pallet-connecting member 420, and each of the protrusion parts 424 on the other side of the support frame 412 can be provided with a locking part 422.

The pallet-connecting member 420 and the locking part 422 serve to connect and couple the pallets 400 to each other placed on the movable carts 322 in parallel by coupling the pallet-connecting member 420 with the locking part 422 of the adjacent pallet 400. For example, the pallet-connecting member 420 can be provided to be rotated on the protrusion part 424 and a latching recess 421 can be provided at one end of the pallet-connecting member 420. By the rotation of the pallet-connecting member 420, the latching recess 421 is coupled with the locking part 422 of the adjacent pallet 400 having a protrusion shape so that the pallet-connecting member 420 and the locking part 422 can be coupled.

Here, the support frame 412 cannot support only the containers 1 stacked in one stage, but can also have a sufficient height to support the containers 1 stacked in multi-stages. Fig. 6 illustrates that the containers 1 are stacked in three (3) stages. However, the present invention can be applied in a case where the containers are stacked in two (2), four (4), or more stages.

Below, the mobile harbor according to one embodiment of the present invention is illustrated in detail with reference to Fig. 2.

The mobile harbor according to one embodiment of the present invention is one embodiment of the floating body 100 which is already illustrated in the above, and is a floating body moved between a container ship (not shown) and the quay-wall Q to unload cargos such as containers from the container ship and to load cargos to the container ship.

The mobile harbor 100 according to one embodiment of the present invention includes the ramp 110 adapted to be laid on the quay-wall which the open-air storage yards 200, 250 is provided on and a loading space 150 in which the pallets 400 for accommodating one or more containers can be placed. The loading space 150 is provided with the guide grooves 130 for guiding the transporting device 300 which connects the plurality of pallets 400 to each other in parallel and transports the pallets 400 from the loading space 150 to the open-air storage yard (200 in Fig. 1) or from the open-air storage yard 250 to the loading space 150.

The ramp 110 is formed such that the ramp 110 is hingedly coupled with the mobile harbor 100, the ramp 110 can be folded and unfolded on one side surface of the mobile harbor 100. The transporting device 300 connecting the pallets 400 (in which one or more containers 1 are accommodated) in parallel can transport the pallets 400 between the mobile harbor 100 and the open-air storage yards 200, 250 through the ramp 110.

The loading space 150 is provided on the upper portion 140 of the mobile harbor 100 for loading the pallets 400 accommodating the containers 1.

Here, the transporting device 300 is to be connected with the plurality of pallets 400 (in which one or more containers 1 are accommodated) in parallel and transports a plurality of pallets 400 at a time to a predetermined location. Accordingly, it is important to move precisely the transporting device 300 to the location at which the plurality of pallets 400 can be connected to the transporting device 300 (in the unloading process) or be loaded on the mobile harbor (in the loading process).

For achieving the above, the guide grooves 130 are formed on the upper portion 140 of the mobile harbor 100, and a distance between the guide grooves is substantially the same as or larger than the width of the movable cart 322 connected to the transporting vehicle 301. Accordingly, the guide grooves 130 can act as an indicator and guider guiding a location to which the transporting device 300 should be entered from the mobile harbor 100. The guide grooves 130 can be structures obtained by digging longitudinal grooves on the upper portions of the mobile harbor 100. It is apparent that the guide grooves 130 can be formed by appending additional structures (for example, 120) at certain intervals.

In addition, although not shown in the drawings, the guide grooves 130 can be formed at locations corresponding to the wheels T of the transporting device 300. Here, each of the guide grooves 130 has a width which has the same as or larger than a width of the wheel T of the transporting device 300 so that the wheels T of the transporting device can be entered in and guided by the guide grooves 130. Also, in this case, a structure obtained by digging longitudinal grooves on the upper portions of the mobile harbor 100 may be used as the guide grooves, and additional structures 120 can be provided with the mobile harbor 100 to form the guide grooves 130.

Here, the transporting device 300 employed in the quay-wall system for unloading and loading the containers 1 as described above can be used as the transporting device 300 in the mobile harbor. The transporting device 300 is constructed such that the transporting device 300 can be coupled to ends of each of the plurality of pallets 400 to arrange the pallets 400 (in which one or more containers 1 are accommodated) in parallel. Concretely, the transporting device 300 includes a plurality of movable carts 322, each of which being coupled to the pallet 400 on the upper portion thereof; the parallel connector 320 connected to front portions of the movable carts 322 to connect the movable carts 322 in parallel with respect to a movement direction of the movable carts 322; and the transporting vehicle 301 coupled to the parallel connector 320.

The transporting vehicle 301 means a driving body which can tow and transport two or more movable carts 322, for example, a truck, a tractor or a trailer can be used as the transporting vehicle.

In addition, The pallet 400 may include a bottom plate 410 and a supporting frame 412 formed upward to support one or more containers 1. Here, the supporting frame 412 can be coupled with the bottom plate 410 by one or more twist locks 430. The support frame 412 in the form of a vertical frame having a framework structure is provided on an upper side of the bottom plate 410 of the pallet 400 to secure one or more containers 1, and prevents one or more containers 1 from being shaken or moved. In addition, the supporting frame 412 may include protrusion parts 424 extended from both sides thereof, the protrusion parts 424 are protruded within the range in which the protrusion parts 424 are not overlapped with the support frame 412 of the adjacent pallet 400 placed in parallel. Here, each of the protrusion parts 424 on the one side of the support frame 412 can be provided with a pallet-connecting member 420, and each of the protrusion parts 424 on the other side of the support frame 412 can be provided with a locking part 422. The pallet-connecting member 420 and the locking part 422 serve to connect and couple the pallets 400 to each other placed on the movable carts 322 in parallel by coupling the pallet-connecting member 420 with the locking part 422 of the adjacent pallet 400. Here, the above coupling can be similarly achieved as the embodiment of the transporting device 300.

Here, the support frame 412 cannot support only the containers 1 stacked in one stage, but can also have a sufficient height to support the containers stacked in multi-stages. Fig. 2 illustrates that the containers 1 are stacked in three (3) stages. However, the present invention can be applied in a case where the containers are stacked in two (2), four (4), or more stages.

Operations of the quay-wall system for unloading and loading the containers 1, the floating body 100 and the transporting device 300 used in the quay-wall system described above are illustrated as follows. Below, a process for unloading the containers 1 from the floating body 100, for example, a ship or a mobile harbor berthed to the dock or the quay-wall Q is illustrated in detail. A process for loading the containers 1 to the floating body 100 can be performed reversely, and so a detail description on a loading process will be omitted.

One or more containers 1 are accommodated in the pallet 400 loaded to the floating body 100 such as the ship or the mobile harbor. There is no doubt that one container 1 is not only accommodated in the pallet 400, but two or more containers 1 can be also accommodated in the pallet 400 in multiple stages.

In a state where a plurality of movable carts 322 disposed in parallel are coupled to the transporting vehicle 301 via the parallel connector 320, the movable carts 322 are moved under the pallet 400 of the floating body 100 by a backward movement of the transporting vehicle 301. At this time, the transporting vehicle 301 and the movable carts 322 are guided by the guide grooves 130 so that a plurality of movable carts 322 disposed in parallel are simultaneously moved under the pallets 400 loaded in parallel, respectively.

Next, once the movable carts 322 are moved under the pallets 400 respectively, each of the movable carts 322 is coupled with each of the bottom plates 410 of the corresponding pallet 400. Subsequently, according to a movement of the transporting vehicle 301, a plurality of pallets 400 placed on the moving parts 322 in parallel are towed, passed through the ramp 110 and then moved to the unloading open-air storage yard 200.

On the unloading open-air storage yard 200, the transporting device 300 is guided by the guide grooves 230 and moved backward. If the transporting device 300 reaches an unloading place of the pallet 400 in which one or more containers 1 are accommodated, the transporting device 300 is separated from the bottom plate 410 of the pallet 400 and then got out of the unloading open-air storage yard 200.

Subsequently, in a case where cargos for which additional unloading process is required are remained, the transporting device 300 is moved to the floating body 100 again.

The quay-wall system for loading and unloading containers, the mobile harbor and the transporting device for use therein according to the present invention are advantageous in that it is possible to transport rapidly and economically the cargos such as containers. In addition, the pallets in which the containers are accommodated are coupled to each other in parallel so that a plurality of containers can be transported. Accordingly, the present invention has the effect that a convenience and efficiency of the loading/unloading process can be enhanced and a risk caused by using a large-sized crane can be removed.

The concrete versions of the quay-wall system for loading and unloading containers, a mobile harbor and a transporting device for use therein according to the embodiments of the present invention are illustrated. However, the above versions are only examples of the present invention, and the present invention is not limited thereto.

While the invention has been shown and described with respect to the preferred embodiments, it will be understood by those skilled in the art that various changes and modifications may be made without departing from the scope of the invention as defined in the following claims.

## Claims

1. A quay-wall system for loading and unloading containers, comprising
a quay-wall having a open-air storage yard provided at an upper portion thereof;
a floating body berthed to the quay-wall and resting a ramp on the quay-wall;
a pallet formed for receiving one or more containers and loaded on the open-air storage yard or the floating body; and
a transporting device transporting the plurality of pallets in parallel from the floating body to the open-air storage yard or from the open-air storage yard to the floating body.

2. The quay-wall system of claim 1, the transporting device comprising:
a plurality of movable carts, each of the movable carts capable of coupling with the pallet on an upper portion thereof;
a parallel connector adapted to connect ends of each movable carts arranged in parallel to a movement direction of the movable carts; and
a transporting vehicle coupled to the parallel connector.

3. The quay-wall system of claim 1 or 2, wherein the open-air storage yard comprises an unloading open-air storage yard and a loading open-air storage yard, each of the unloading open-air storage yard and the loading open-air storage yard has guide grooves provided thereon for guiding the transporting device.

4. The quay-wall system of one of claims 1 to 3, wherein the floating body has guide grooves provided on an upper portion thereof for guiding the transporting device.

5. The quay-wall system of one of claims 1 to 4, wherein the transporting device is provided with wheels, and the guide grooves of each of the open-air storage yard and the floating body are formed to guide a portion of the wheels.

6. The quay-wall system of one of claims 1 to 5, wherein the ramp is adapted to be folded and unfolded at one side surface of the floating body.

7. The quay-wall system of one of claims 1 to 6, wherein
the pallet comprises a bottom plate and a supporting frame formed upward to support one or more containers,
the supporting frame includes protrusion parts extended from both sides thereof, and
the protrusion parts of the one side of the supporting frame are provided with pallet-connecting members, and the protrusion parts of the other side of the supporting frame are provided with locking parts with which the pallet-connecting members are capable of being coupled respectively.

8. The quay-wall system of claim 7, wherein two or more containers are stacked in a multiple stage manner in the supporting frame.

9. A mobile harbor comprising;
a ramp adapted to be rested on a quay-wall; and
a loading space provided on the mobile harbor to accommodate one or more pallets having one or more containers stacked therein,
wherein the loading space has guide grooves formed thereon for guiding a transporting device which is adapted to be coupled with the two or more pallets in parallel and transports the pallets from the loading space to an open-air storage yard of the quay-wall or from the open-air storage yard to the loading space.

10. The mobile harbor of claim 9, wherein the transporting device comprises;
a plurality of movable carts, each of which is coupled to the pallet on an upper portion thereof;
a parallel connector adapted to connect ends of each movable carts arranged in parallel to a movement direction of the movable carts; and
a transporting vehicle coupled to the parallel connector.

11. The mobile harbor of claim 9 or 10, wherein the transporting vehicle is provided with wheels, and the guide grooves of the mobile harbor are formed to guide a portion of the wheels.

12. The mobile harbor of one of claims 9 to 11, wherein the ramp is adapted to be folded and unfolded at one side surface of the mobile harbor.

13. The mobile harbor of one of claims 9 to 12, wherein
the pallet comprises a bottom plate and a supporting frame formed upward to support one or more containers,
the supporting frame includes protrusion parts extended from both sides thereof, and
the protrusion parts of the one side of the supporting frame are provided with pallet-connecting members, and the protrusion parts of the other side of the supporting frame are provided with locking parts with which the pallet-connecting members are coupled respectively.

14. The mobile harbor of claim 13, wherein two or more containers are stacked in a multiple stage manner in the supporting frame.

15. A transporting device for being coupled a plurality of pallets in parallel and transporting the pallets from an open-air storage yard provided on a quay-wall to a floating body or from the floating body to the open-air storage yard.

16. The transporting device of claim 15, wherein the transporting device comprises;
a plurality of movable carts, each of the movable carts capable of coupling with the pallet on an upper portion thereof;
a parallel connector adapted to connect ends of each movable carts arranged in parallel to a movement direction of the movable carts; and
a transporting vehicle coupled to the parallel connector.

17. The transporting device of claim 15 or 16, wherein
the pallet comprises a bottom plate and a supporting frame formed upward to support one or more containers,
the supporting frame includes protrusion parts extended from both sides thereof, and
the protrusion parts of the one side of the supporting frame are provided with pallet-connecting members, and the protrusion parts of the other side of the supporting frame are provided with locking parts with which the pallet-connecting members are coupled respectively.
